# EUROPEAN PATENT APPLICATION

(11) **EP 2 241 994 A1**
(43) Date of publication of application: **20.10.2010**
(21) Application number: 10156394.8
(22) Date of filing: 12.03.2010
(51) Int. Cl.: G06F 21/00

(54) **Security client translation system and method**

(30) Priority: 16.04.2009 US 425170
(71) Applicant: Comcast Cable Communications, LLC, Philadelphia, PA 19103 (US)
(72) Inventor: Fahrny, James, Parker CO 80134 (US)
(74) Representative: Watterson, Peer Marten John

(57) **Abstract**

Systems and methods for controlling the use of audio, video and audiovisual content are provided. Usage rights and entitlement translation permit numerous devices to store and view media content. The usage rights may be encoded in the content or otherwise bound to the content. Security packages may be created by mapping Conditional Access System entitlements to DRM in hardware security elements. Playback devices are configured to access the translated usage rights and verify rights prior to the viewing of media.

## Description

### TECHNICAL FIELD

Aspects of the disclosure relate to providing secure delivery of content and program streams in home network applications. More specifically, aspects of the disclosure relate to methods and related systems for securing content and entitlements around end points of a home network.

### BACKGROUND

Modem network environments generally have a network device at an end user's location to allow proper reception and transmission of information. For example, in cable communications network environments, end users generally utilize a set top box or modem to receive and transmit information from cable providers. Typically, the data transmitted from the cable provider's network to an end user comprises audio, video, and audio visual content. Such content may be delivered using various security mechanisms.
These security mechanisms attempt to ensure that only authorized users utilize the delivered content.

Legacy Conditional Access Systems (CAS) provide security for delivered content, but are prone to hacker attack and protection of content after the first user has accessed this content is usually weak. Furthermore, such legacy systems do not provide for efficient and secure transmission of high value content in a home network to numerous different computing devices. Conditional Access Systems are hardware based but are not very adaptable to different business models involving delivery of content.

Digital Rights Media (DRM) also provides security for various forms of delivered content, but such systems are usually weaker in overall security as compared to legacy CAS systems. DRM does provide better flexibility to adapt to different business models involving the delivery of content, but this flexibility comes with additional security risks as compared to CAS systems. Currently, these two security systems (CAS & DRM) are very difficult to integrate and do not interoperate in distribution systems today.

Thus, systems and methods that provide for flexible and improved security delivery of content in a home network to numerous different computing devices would be beneficial to the art.

### BRIEF SUMMARY

The following presents a simplified summary of the disclosure in order to provide a basic understanding of some aspects. It is not intended to identify key or critical elements or to delineate the scope of the invention. The following summary merely presents some concepts of the disclosure in a simplified form as a prelude to the more detailed description provided below.

In an illustrative aspect of the disclosure, a translation system provides for implementation of a heterogeneous network of legacy and newer devices to authenticate and transfer rights to home network end-points. In an illustrative embodiment, content keys may be encrypted while entitlements may be encrypted and digitally signed.

In another illustrative embodiment, security packages are created by mapping Conditional Access System (CAS) entitlements to DRM in hardware security elements. In an illustrative embodiment, entitlements from the CAS may be mapped into home network systems, Real Networks DRM, Windows DRM, other DRM Systems, or new home networking and rights management systems.

In another aspect, usage rights or entitlements may be translated to permit numerous devices to store and view media content. The usage rights may be encoded in the content or otherwise cryptographically bound to the content. Playback devices may be configured to access the appropriate usage rights and control usage in accordance with the usage rights.

Other embodiments can be partially or wholly implemented on a computer-readable medium, for example, by storing computer-executable instructions or modules, or by utilizing computer-readable data structures.

Of course, the methods and systems of the above-referenced embodiments may also include other additional elements, steps, computer-executable instructions, or computer-readable data structures. In this regard, other illustrative embodiments are disclosed and claimed herein as well.

The details of these and other embodiments are set forth in the accompanying drawings and the description below. Other features and advantages will be apparent from the description and drawings, and from the claims.**BRIEF DESCRIPTION OF THE DRAWINGS**

The present disclosure is illustrated by way of example and not limited in the accompanying figures in which like reference numerals indicate similar elements and in which:

Figure 1 illustrates a system that may be used to control use of content in a networked environment in accordance with various aspects of the disclosure.

Figure 2 illustrates an illustrative host device in accordance various aspects of the disclosure.

Figure 3 illustrates one illustrative embodiment of a security processor of the host device of Figure 2 in accordance with various aspects of the disclosure.

Figure 4 illustrates a content playback device that may be used to playback content to users in accordance with various aspects of the disclosure.

Figure 5 illustrates another illustrative embodiment of a security processor of the host device of Figure 2 in accordance with an aspect of the disclosure.

Figure 6 illustrates a method of controlling use of content in a networked environment in accordance with an aspect of the disclosure.

### DETAILED DESCRIPTION

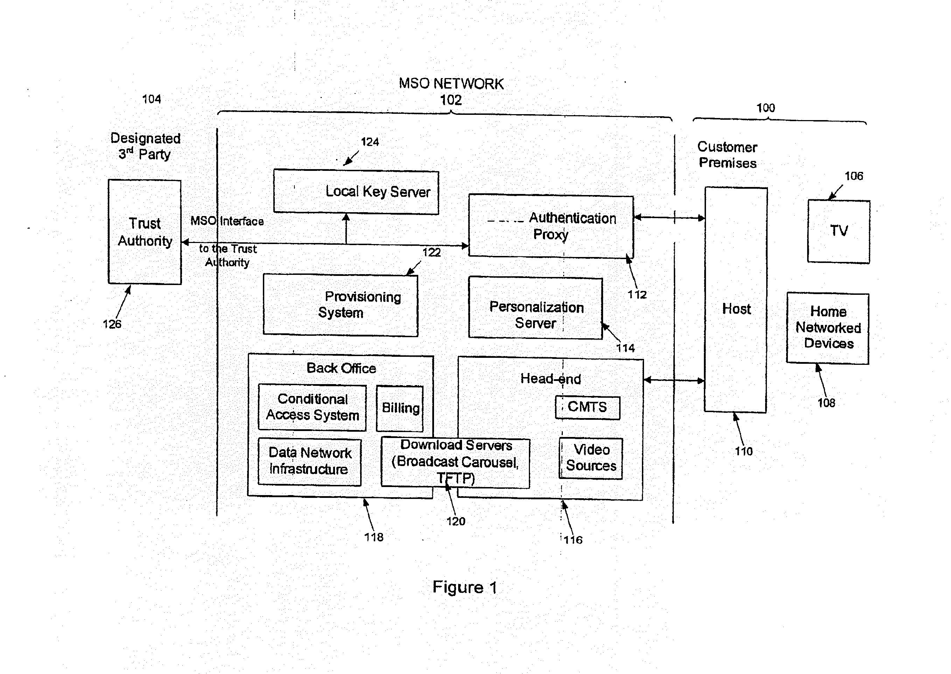

Figure 1 illustrates a system that may be used to provide security architecture for protection of advanced video systems and emerging media technologies delivered to compliant premises equipment such as for example a set top box or set top device in accordance with an illustrative embodiment of the disclosure. As used herein "content" includes audio content, video content, audiovisual content, and any combination thereof. Figure 1 is illustrative of one type of architecture that may be used in accordance with various aspects of the disclosure. Those skilled in the art will realize that other architectures may be used to with various embodiments of the disclosure.

In Figure 1, customer premises 100 may include numerous home network devices 108. The home network devices 108 may include televisions, DVD players, personal computers, home servers, gaming machines, phones, and a host of portable personal media players. Furthermore, customer premises 100 may also include a Host device 110 which may be in the form of a set top box or set top device.

The host device 110 may communicate to a MSO network 102. The MSO network 102 may include an authentication proxy 112, a personalization server 114, a head-end 116, a back office 118, a provisioning system 122, and a local key server 124. In an illustrative embodiment, download servers 120 may interlink the head-end 116 with the back office 118. In an illustrative embodiment, the primary point for communication for host 110 is authentication proxy 112. In an additional illustrative embodiment, head-end 116 may also directly communicate with host 110 to provide content material.

In another aspect of the disclosure, Figure 1 illustrates that a designated third party 104 may provide a trust authority module 126. The trust authority module 126 may provide secure keys and information related to the secure keys to the authentication proxy 112 and/or local key server 124.

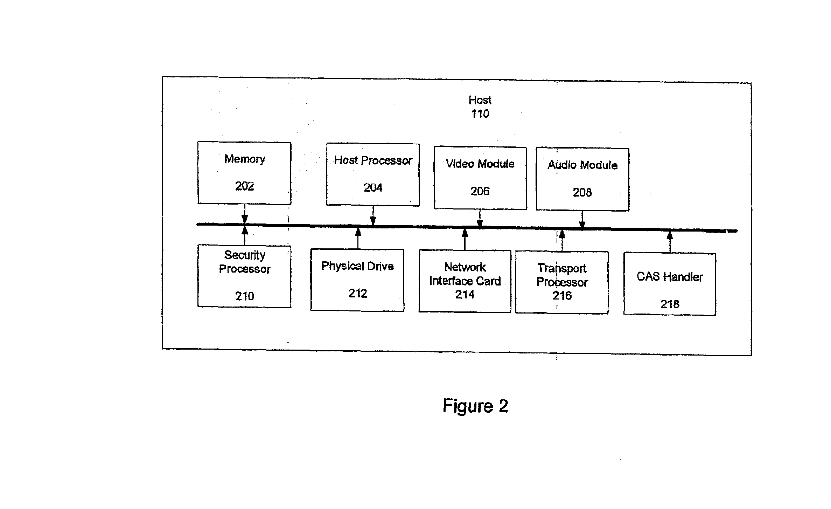

Figure 2 shows an illustrative host device 110 in accordance with an aspect of the disclosure. In Figure 2, host device 110 may include memory 202 which may be read-only memory, random access memory, or combination of read-only and random access memory. Furthermore, host device 110 may also include flash memory. Host device 110 may also include a host processor 204 to execute computer-executable instructions which may be stored in memory 202. Host processor 204 may handle all routine processing functions for the host device 110. Host device 110 may also include a video module 206 to generate and provide video signals to a display device. An audio module 208 may be used to generate and provide audio signals for playback. In another embodiment, audio module 208 and video module 206 may generate signals to be transmitted to other attached video and or audio devices.

Host device 110 may also include a physical drive 212 to read content stored on physical devices, such as CDs or DVDs. A network interface card 214 may also be included to connect content playback device to a network. The network may be a local area network or a wide-area network, such as the Internet. In addition, the network may be a wireless network.

In an aspect of the disclosure, host device 110 may also include a transport processor 216. Transport processor 216 may assist in decryption of content received by host device 110. A CAS handler 218 may also be included in host device 110. CAS handler 218 may handle message processing according to a specific network configuration.

In an aspect of the disclosure, host 110 may include a security processor 210. The security processor 210 may be a secure chip that supports various communication protocols. In an illustrative embodiment, security processor 210 may generate and store keys for use in creating security packages for transporting content to other content devices attached to a home network. In an embodiment, the security processor may comprise a smartcard, USB token, an on board security chip or even a macro block in a larger ASIC for a PC, cell phone, portable device or a set-top box.

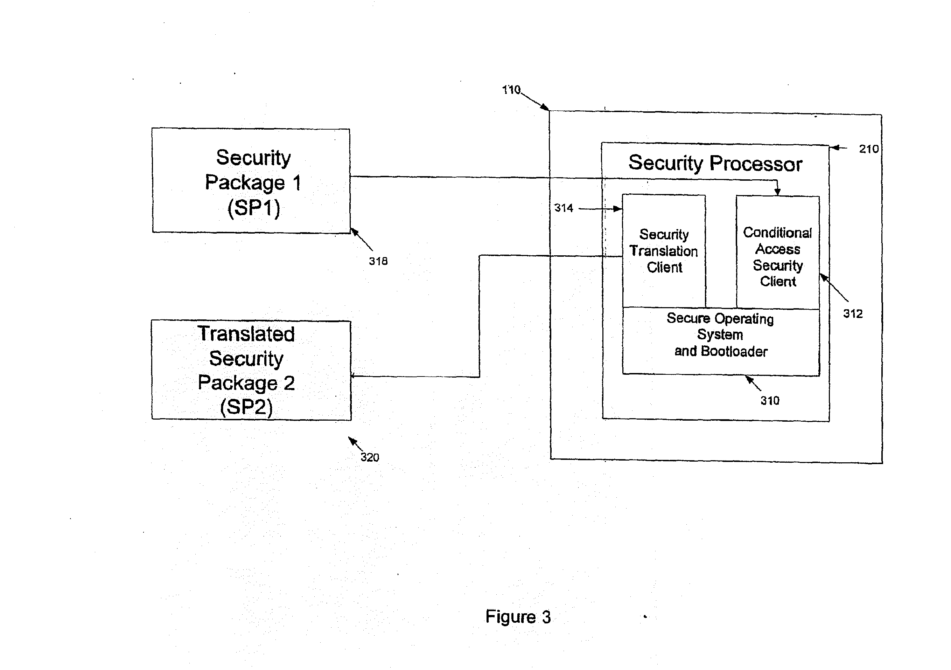

Figure 3 illustrates security processor 210 of host device 110 shown in Figure 2 in accordance with various aspects of the disclosure. In Figure 3, a security processor 210 may include a secure operating system and bootloader 310. The secure operating system and bootloader 310 may enable security processor 210 to boot and download various clients. In an illustrative embodiment, the secure operating system and bootloader 310 may allow the security processor 210 to significantly expand the security protocols that may be implemented for the host device 110. In an illustrative embodiment, different security translation clients may be downloaded and utilized to handle key management and encryption algorithms. In an embodiment, different security clients may coexist on a single security processor 210. In another aspect of the invention, security clients may be placed on a system on a chip (SOC). In another embodiment, the security translation clients may be fixed in order to support at least one translation such as from a CAS to a DRM solution.

In Figure 3, security processor 210 may include a conditional access security client 312. The conditional access security client 312 may receive a security package 1 (318) from the MSO network 102 (Figure 1). The security package 1 (318) may include various viewing rights or entitlements associated with the content to be delivered. For example, security package 1 (318) may include DVR viewing rights for a movie. In an aspect of the disclosure, the contents of security package 1 (318) may be digitally signed by a trusted entity to ensure that usage rights for the content cannot be altered. In another illustrative embodiment, security package 1 (318) may include secret keys and or control words associated with the content being transported.

In Figure 3, security package 1 (318) may be received by conditional access client 312.
In an embodiment of the disclosure, the conditional access security client 312 may handle key management for decrypting the received content. For example, conditional access security client 312 may decrypt the content transmitted in security package 1 (318). The decrypted content may include usage rights for the delivered content. The usage rights may include rights to distribute the content to a personal portable media device for viewing. In an aspect of the disclosure, the decrypted usage rights may be translated and placed into a translated security package 2 or ticket 320. The translated security package 2 (320) may be generated by security translation client 314. In an illustrative embodiment, the translated usage rights found in translated security package 2 (320) may be formatted into a structure compatible with a digital rights management structure (DRM) and security system. In an illustrative embodiment, translated security package 2 (320) may be transmitted to a portable media device through a home network for playing on the personal portable media device.

In an aspect of the disclosure, translated security package 2 (320) may include a license for content and/or an encryption key. The translated security package 2 (320) may include content rights for viewing the content on various networked home devices 108. In an embodiment, the translated security package 2 (320) may or may not require a network connection to view content. In an illustrative embodiment, the content rights may include portable media rights or personal computer rights. In addition, in another illustrative embodiment, the translated security package 2 (320) may also include a number of copies allowed to be created and/or a viewing expiration time for the included content.

In another aspect, the translated security package 2 (320) may also include content that has been encoded into a different format based on a review of the usage rights included with the content. In an illustrative embodiment, usage rights may indicate the content structure required by the end user device for accessing of the content.

In an aspect of the invention, the translated security package 2 (320) may be generated with a unique content key or keys. In an illustrative embodiment, the translated security package 2 (320) may be cryptographically bound to the content by hashing a globally unique Content ID to some additional unique data. Those skilled in the art will realize that different hashing methods may be used to secure the content. In addition, the information used for hashing the content may be transported in a created security package. In an illustrative embodiment the generated secunty package may be transmitted to a content player or other destination for viewing or accessing of the received content. In another embodiment, an encryption key may be used such that the content contains the encryption key. In an alternative embodiment, the encryption key may be received through other delivery methods which may only decrypt or validate the signature for a single contents rights usage file that is associated to one piece of content.

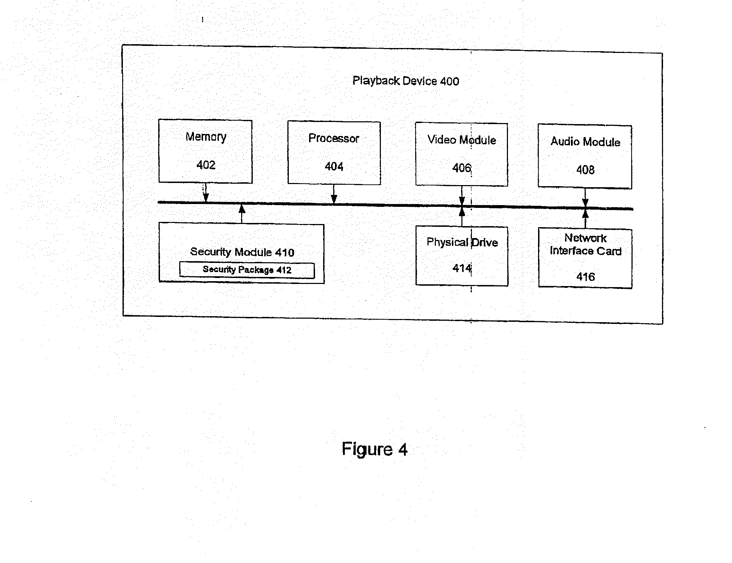

Figure 4 illustrates a content playback device 400 that may be used to playback content to users, in accordance with illustrative embodiments of the disclosure. Content playback device 400 may be implemented with a projector, set-top box, DVD player, broadcast receiver, computer device, portable media device, MP3 player, game machine, mobile telephone, or any other electronic device that can be configured to present audio, video or audiovisual content to users. A memory 402 may be used to store computer-executable instructions and data. Memory 402 may be implemented with a read-only memory, random access memory or combination. A processor 404 may be used to execute computer-executable instructions and control the overall operation of content playback device 400. A video module 406 may be included to generate and provide video signals to a display device. An audio module 408 may be used to generate and provide audio signals for playback through one or more speakers or headphones.

Content playback device 400 may also include a security module 410. The security module 410 may receive a security package 412 from a host device such as host device. 110 (Figure 1). The security package 412 may be accessible by content playback device 400. In an illustrative embodiment, security module 410 may be implemented with an integrated circuit that is configured to access security package 412. Security package 412 may contain usage rights and content for use by the content playback device 400. For example, content playback device 400 may be a DVD player used to display contents of security package 412 such as a movie for viewing.

In an illustrative embodiment, content playback device 400 may include a physical drive 414 to read content stored on physical devices, such as CDs or DVDs. A network interface card 416 may also be included to connect content playback device to a network. The network may be a local area network or a wide-area network, such as the Internet.

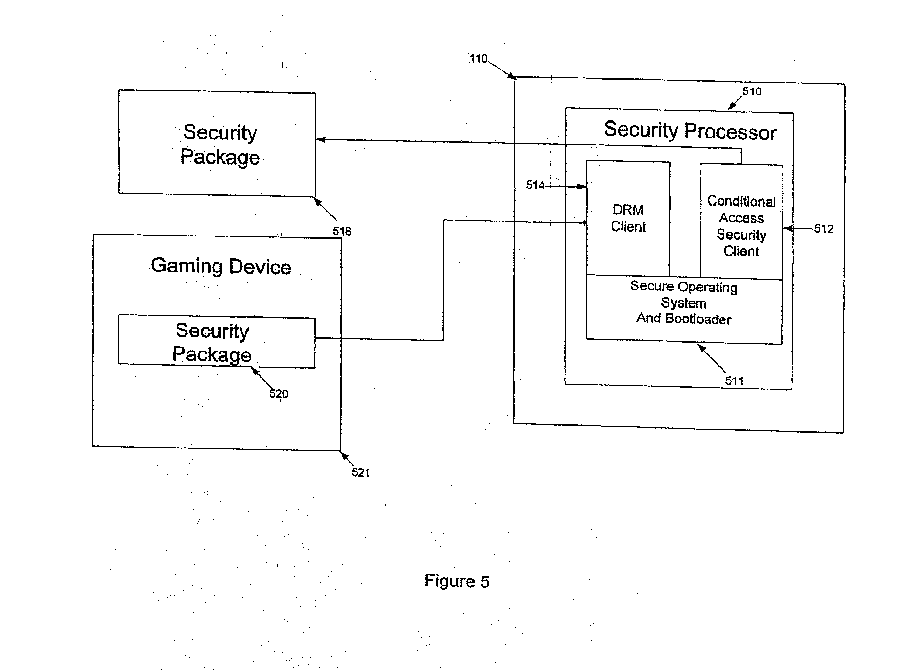

In another aspect, a security processor 510 may include a DRM client 514, as shown in Figure 5. The DRM client 514 may receive a DRM security package 520 from a device such as gaming device or console 521. The DRM security package 520 may include various viewing rights associated with the content to be delivered. For example, DRM security package 520 may include DVR viewing rights for a movie. In an aspect of the disclosure, the contents of the DRM security package 520 may be digitally signed by a trusted entity to ensure that usage rights for the content cannot be altered. In another embodiment, DRM security package 520 may include secret keys and or control words associated with the content being transported. A DRM client 514 may translate the usage rights into conditional access rights via the conditional access security client 512. The generated access rights may be included in a security package 518 and forwarded to other compatible devices for playback through a home network. In another illustrative embodiment, the security package 518 may be delivered into a MSO network for delivery.

In another aspect, the security processor 510 may include a secure operating system and bootloader 511. The secure operating system and bootloader 511 may enable security processor 510 to boot and download various clients. In an illustrative embodiment, different security translation clients may be downloaded and utilized to handle key management and encryption algorithms. In an illustrative embodiment, different security clients may coexist on a single security processor 510. In another aspect, security clients may be placed on a system on a chip (SOC).

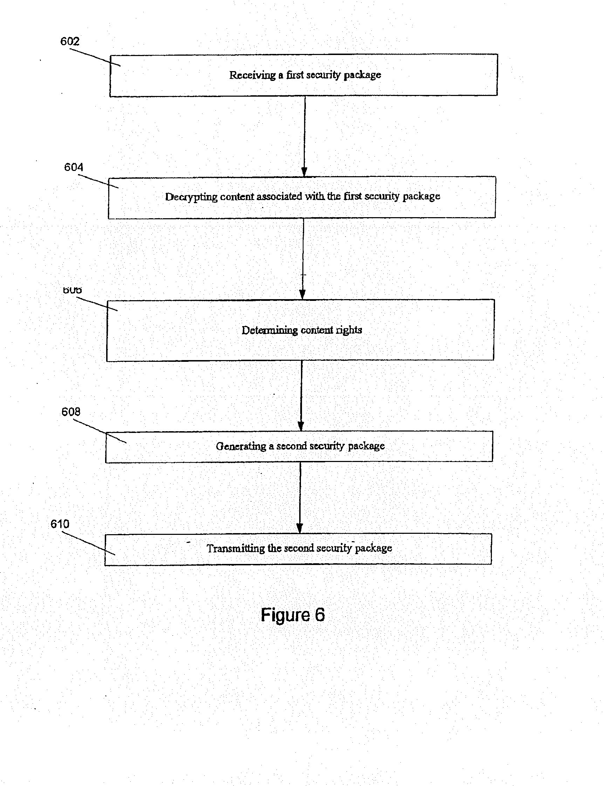

Figure 6 illustrates a method of controlling use of content in a networked environment in accordance with an aspect of the disclosure. In Figure 6, at step 602, a first security package may be received by a host. The first security package may include encrypted content. Next, in step 604 the encrypted content may be decrypted by the host. In an illustrative embodiment, the host may be a set top box. In another embodiment, the host may be validated to a domain and the content conditionally translated if the host and the first security package allow translation. In step 606, content rights associated with the security package may be determined. Next, in step 608, a second security package may be generated with a unique content key. In an illustrative embodiment, the unique content key may be a domain ID. In addition, the unique content key may be any information which associates a customer with his/her network.

In an aspect of the disclosure, the second security package may also include associated media content. In an aspect of the invention, the generated security package may be bound to the media content through a hashing function. In an embodiment, the first security package may comprise a CAS security package and the second security package may comprise a DRM security package. In another embodiment, the first security package may comprise a DRM security package and the second security package may comprise a CAS security package. Those skilled in the art will realize that other security packages may also be generated based on the actual clients installed on the security processor. Finally, in step 610 the created second security package may be transmitted to a networked device for accessing of the encrypted content.

While the illustrative embodiments have been discussed in broad terms of a cable or fiber optic communications networking environment, the invention, however, may be configured for other networking environments including various existing and future telecommunications environments.
There follows a selection of a number of features relating to one or more embodiments of the invention. Where a numbered feature refers to an earlier numbered feature, then all of the elements of that earlier feature are understood to be included with the referring feature. Applicant gives notice that it reserves the right to claim any of the below features, either singularly or in combination.

### Features

1. A method for controlling use of content in a networked environment, the method comprising:
   receiving a first security package, the first security package including encrypted content and a unique content key;
   decrypting the encrypted content;
   determining content rights for the encrypted content;
   generating at a processor a second security package with the unique content key, the second security package including media content; and
   transmitting the generated second security package to a networked device for accessing of the included media content.
2. The method of feature 1, wherein said generating further comprises binding the generated security package with the media content using a globally unique content ID (GUCID).
3. The method of feature 2, wherein the binding comprises hashing the generated second security package with the media content using the globally unique content ID.
4. The method of feature 1, wherein said determining further comprises determining usage rights.
5. The method of feature 1, wherein the first security package comprises a CAS security package.
6. The method of feature 1, wherein the second security package comprises a DRM security package.
7. The method of feature 1, wherein the first security package comprises a DRM security package.
8. The method of feature 1, wherein the second security package comprises a CAS security package.
9. The method of feature 1, wherein the first security package comprises a ticket.
10. The method of feature 1, wherein the second security package comprises a ticket.
11. The method of feature 1, wherein said determining further comprises accessing a header file to determine the content rights for the encrypted content.
12. The method of feature 1 further comprising, re-encrypting the media content prior to transmitting the generated second security package to a networked device for accessing of the included media.
13. A device comprising: a security processor configured to:
   access content usage rights encoded using a first security client; translate the accessed content usage rights with a second security client; generate a security package with a unique content key, the security package including the translated content usage rights; and
   transmit the security package to a networked device for playback.
14. The device of feature 13, wherein the device comprises a set top box.
15. The device of feature 13, wherein the device comprises a cellular telephone.
16. The device of feature 13, wherein the device comprises a portable media player.
17. The device of feature 13, wherein the usage rights correspond to copy control information.
18. A computer-readable medium comprising computer-executable instructions that when executed cause a computer device to perform the method comprising:
   receiving a first security package, the first security package comprising encrypted content;
   decrypting the encrypted content;
   determining content rights for the encrypted content;
   generating a second security package with a unique content key, the second security package including media content; and
   transmitting the generated second security package to a networked device for accessing of the included media content.
19. The computer-readable medium of feature 18, wherein said generating further comprises binding the generated security package with media content using a globally unique content ID.
20. The computer-readable medium of feature 19, wherein the binding comprises hashing the generated second security package with the media content using the globally unique content ID.
21. The computer-readable medium of feature 20, wherein the generated second security package further comprises a list of devices which can execute the media content.
22. The computer-readable medium of feature 18, wherein said content rights comprise usage rights.
23. A system for controlling use of content in a home networked environment, the system comprising:
   a set top box, the set top box configured to:
      access audio visual content usage rights encoded using a first security client;
      translate the accessed content usage rights with a second security client; generate a security package with a unique content key, the security package comprising the translated content usage rights; and
      transmit the security package to a networked device; and a playback device, the playback device configured to receive the transmitted security package through a networked environment and access the content based on the translated content usage rights.
24. The system of feature 23, wherein the playback device comprises a gaming machine.
25. The system of feature 23, wherein the playback device comprises a personal portable device.

## Claims

1. A method for controlling use of content in a networked environment, the method comprising:
receiving a first security package, the first security package including encrypted content and a unique content key;
decrypting the encrypted content;
determining content rights for the encrypted content;
generating a second security package with the unique content key, the second security package including media content; and
transmitting the generated second security package to a networked device for accessing of the included media content.

2. The method of claim 1, wherein said generating occurs at a processor.

3. The method of claim 1 or claim 2 wherein said generating further comprises binding the generated security package with the media content using a globally unique content ID (GUCID), wherein the binding may comprise hashing the generated second security package with the media content using the globally unique content ID.

4. The method of any preceding claim, wherein:
said determining further comprises determining usage rights; and/or
the first security package comprises a CAS security package; and/or
the second security package comprises a DRM security package; and/or
the first security package comprises a DRM security package; and/or
the second security package comprises a CAS security package and/or
the first security package comprises a ticket and/or
the second security package comprises a ticket and/or
said determining further comprises accessing a header file to determine the content rights for the encrypted content.

5. The method of any preceding claim further comprising re-encrypting the media content prior to transmitting the generated second security package to a networked device for accessing of the included media.

6. A device comprising: a security processor configured to:
access content usage rights encoded using a first security client; translate the accessed content usage rights with a second security client; generate a security package with a unique content key, the security package including the translated content usage rights; and
transmit the security package to a networked device for playback.

7. The device of claim 6, wherein the device comprises a set top box, a cellular telephone or a portable media player.

8. The device of claim 6 or claim 7, wherein the usage rights correspond to copy control information.

9. A computer-readable medium comprising computer-executable instructions that when executed cause a computer device to perform the method comprising:
receiving a first security package, the first security package comprising encrypted content;
decrypting the encrypted content;
determining content rights for the encrypted content;
generating a second security package with a unique content key, the second security package including media content; and
transmitting the generated second security package to a networked device for accessing of the included media content.

10. The computer-readable medium of claim 9, wherein said generating further comprises binding the generated security package with media content using a globally unique content ID.

11. The computer-readable medium of claim 10, wherein the binding comprises hashing the generated second security package with the media content using the globally unique content ID and wherein the generated second security package may further comprise a list of devices which can execute the media content.

12. The computer-readable medium of any of claims 9 to 11, wherein said content rights comprise usage rights.

13. A system for controlling use of content in a home networked environment, the system comprising:
a set top box, the set top box configured to:
access audio visual content usage rights encoded using a first security client;
translate the accessed content usage rights with a second security client; generate a security package with a unique content key, the security package comprising the translated content usage rights; and
transmit the security package to a networked device; and a playback device, the playback device configured to receive the transmitted security package through a networked environment and access the content based on the translated content usage rights.

14. The system of claim 13, wherein the playback device comprises a gaming machine.

15. The system of claim 13 or claim 14, wherein the playback device comprises a personal portable device.
